# EUROPEAN PATENT APPLICATION

(11) **EP 3 457 687 A1**
(43) Date of publication of application: **20.03.2019**
(21) Application number: 18194450.5
(22) Date of filing: 14.09.2018
(51) Int. Cl.: H04N 9/31

(54) **ILLUMINATION SYSTEM AND PROJECTION APPARATUS**

(30) Priority: 19.09.2017 CN 201710844737
(71) Applicant: Coretronic Corporation, Hsin-Chu 300 (TW)
(72) Inventor: CHANG, JUI, 300 Hsin-Chu (TW)
(74) Representative: Ter Meer Steinmeister & Partner

(57) **Abstract**

The invention relates to an illumination system (100), which includes a first light-emitting element (110), a light-emitting module (120), a light-diffusing element (130), a wavelength conversion device (140) and a light-splitting element (150). The first light-emitting element (110) emits a first laser beam. The light-emitting module (120) emits second and third laser beams. The light-diffusing element (130) is located between the light-emitting module (120) and the light-splitting element (150), and allows the second and third laser beams to pass through. The wavelength conversion device (140) is excited by the first laser beam to emit a converting beam. The light-splitting element (150) is disposed on transmission paths of the second and third laser beams, and disposed on a transmission path of the first laser beam and a transmission path of the converting beam. The light-splitting element (150) is configured to guide the second and third laser beams and the converting beam to an identical transmission direction (D1). Further, a projection apparatus is also provided.

## Description

This application claims the priority of China application serial no. 201710844737.5, filed on September 19, 2017.

### BACKGROUND

### 1. Field of the Invention

The invention relates to an illumination system and a projection apparatus.

### 2. Description of Related Art

In general, a light source module of a laser projector usually has the architecture in which two blue laser modules are disposed. One of the two blue laser modules is configured to continuously provide a blue beam, and the other one is configured to be irradiated a yellow phosphor for converting into a yellow beam. The light source module then splits the yellow beam into a red beam and a green beam through a color filter. Based on the above architecture, in order to obtain a purer red beam, it is necessary to shift a passable wavelength band of the color filter father in a direction towards a red wavelength band. However, the rest of the beams would be yellowish. In other words, the green beam will appear in a yellower phenomenon, and vice versa. Therefore, the laser projector described above is unable to achieve a wide gamut color display. Also, since the green beam and the red beam are obtained by filtering the yellow beam with the color filter in the above architecture, a ratio between the red beam and the green beam in a projection frame projected by the laser projector cannot be adjusted freely.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The invention provides an illumination system with simple structure and lower manufacturing cost, which is capable of easily modifying a color display of a projection frame by using a projection apparatus of the illumination system.

The invention provides a projection apparatus with simple structure and lower manufacturing cost, which is capable of easily modifying a color display of a projection frame.

The object is solved by the features of the independent claims. Preferred embodiments are given in the dependent claims.

To achieve one, a part, or all of the above objectives or other objectives, an embodiment of the invention proposes an illumination system, which includes a first light-emitting element, a light-emitting module, a light-diffusing element, a wavelength conversion device and a light-splitting element. The first light-emitting element is configured to emit a first laser beam. The light-emitting module is configured to emit a second laser beam and a third laser beam. A wavelength of the second laser beam is different from a wavelength of the third laser beam. The light-diffusing element is located between the light-emitting module and the light-splitting element, and configured to allow the second laser beam and the third laser beam to pass through. The wavelength conversion device is disposed on a transmission path of the first laser beam, and the wavelength conversion device is excited by the first laser beam to emit a converting beam. The light-splitting element is disposed on a transmission path of the second laser beam and a transmission path of the third laser beam passing through the light-diffusing element, disposed on the transmission path of the first laser beam and disposed on a transmission path of the converting beam. The light-splitting element is configured to guide the second laser beam, the third laser beam and the converting beam to an identical transmission direction.

To achieve one, a part, or all of the above objectives or other objectives, an embodiment of the invention proposes a projection apparatus, which includes the illumination system described above, at least one light valve and a projection lens. The at least one light valve is configured to receive the converting beam to form a first image beam, receive the second laser beam to form a second image beam, and receive the third laser beam to form a third image beam. The projection lens is disposed on a transmission path of the first image beam, a transmission path of the second image beam and a transmission path of the third image beam, and projects the first image beam, the second image beam and the third image beam onto a projection medium.

Preferably, the light-emitting module comprises a second light-emitting element and a third light-emitting element.

Preferably, the second light-emitting element is configured to emit the second laser beam.

Preferably, the third light-emitting element is configured to emit the third laser beam.

Preferably, the light-emitting module further comprises a light-combining element.

Preferably, the light-combining element is configured to make a light path of the second laser beam passing through the light-combining element be identical to a light path of the third laser beam passing through the light-combining element.

Preferably, a light path of the first laser beam and a light path of the third laser beam are perpendicular to each other and met at the light-splitting element.

Preferably, a light path of the first laser beam and a light path of the third laser beam are parallel to each other and met at the light-splitting element.

Preferably, the light-splitting element is configured to allow the second laser beam and the third laser beam to pass through and reflect the converting beam.

Preferably, the light-splitting element is configured to reflect the second laser beam and the third laser beam and allow the converting beam to pass through.

Preferably, the light-diffusing element comprises a light-diffusing structure and an anti-reflection coating.

Preferably, the anti-reflection coating and the light-diffusing structure are respectively disposed on two opposite surfaces of the light-diffusing element.

Preferably, the second laser beam and the third laser beam are transmitted to the light-splitting element after passing through the anti-reflection coating and the light-diffusing structure in sequence.

Preferably, the second laser beam is a red laser beam, the first laser beam and the third laser beam are blue laser beams, and the converting beam is a yellow beam or a green beam.

Preferably, the light-splitting element comprises a first light-splitting plate and a second light-splitting plate.

Preferably, the first light-splitting plate comprises a first portion and a third portion, and the second light-splitting plate comprises a second portion and a fourth portion.

Preferably, the first portion is configured to reflect the first laser beam, the second laser beam and the third laser beam,

Preferably, the second portion is configured to allow the first laser beam to pass through and reflect the converting beam.

Preferably, the third portion is configured to reflect the first laser beam, the second laser beam and the third laser beam and allow the converting beam to pass through.

Preferably, the fourth portion is configured to allow the second laser beam and the third laser beam to pass through and reflect the converting beam.

Preferably, the light-emitting module comprises a second light-emitting element, a third light-emitting element and a light-combining element.

Preferably, the second light-emitting element is configured to emit the second laser beam.

Preferably, the third light-emitting element is configured to emit the third laser beam.

Preferably, the light-combining element is configured to make a light path of the second laser beam via the light-combining element be identical to a light path of the third laser beam via the light-combining element.

Preferably, a light path of the first laser beam and a light path of the third laser beam are perpendicular to each other and met at the light-splitting element.

Preferably, the light-splitting element is configured to allow the second laser beam and the third laser beam to pass through and reflect the converting beam.

Preferably, the second laser beam is a red laser beam, the first laser beam and the third laser beam are blue laser beams, and the converting beam is a yellow beam or a green beam.

Preferably, the light-diffusing element comprises a light-diffusing structure and an anti-reflection coating.

Preferably, the anti-reflection coating and the light-diffusing structure are respectively disposed on two opposite surfaces of the light-diffusing element.

Preferably, the second laser beam and the third laser beam are transmitted to the light-splitting element after passing through the anti-reflection coating and the light-diffusing structure in sequence.

Based on the above, in the illumination system according to the embodiments of the invention, the first laser beam provided by the first light-emitting element excites the wavelength conversion device to form the converting beam, and the light-emitting module is configured to emit the second laser beam and the third laser beam having the different wavelengths. Accordingly, the illumination system according to the embodiments of the invention can easily modify a color property of an integrated beam outputted by the illumination system by controlling light intensities included by the first, second and third laser beams. Further, because the projection apparatus according to the embodiments of the embodiment includes the illumination system described above, the projection apparatus according to the embodiments of the invention can easily adjust the color property of the projection frame by adjusting the light intensities included by the first, second and third laser beams. Furthermore, in the illumination system and the projection apparatus according to the embodiments of the invention, the light-diffusing element is disposed on both the transmission path of the second laser beam and the transmission path of the third laser beam. Therefore, the illumination system and the projection apparatus according to the embodiments of the invention can have simple structure and lower manufacturing cost.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a projection apparatus according to an embodiment of the invention.
FIG. 1A is a schematic diagram of light paths of three blue laser diode modules in a first light-emitting element in FIG. 1.
FIG. 1B is a partial schematic diagram of a light-combining element in FIG. 1A.
FIG. 2A is a schematic diagram of light paths of a first laser beam and a converting beam in an illumination system of FIG. 1.
FIG. 2B is a schematic diagram of a light path of a second laser beam in the illumination system of FIG. 1.
FIG. 2C is a schematic diagram of a light path of a third laser beam in the illumination system of FIG. 1.
FIG. 2D is a cross-sectional view of a light-diffusing element in FIG. 1.
FIG. 2E is a top view of a light-diffusing element in FIG. 1.
FIG. 2F illustrates a region defined by REC.709 standard gamut, a region defined by DCI-P3 standard gamut, a region defined by a gamut of the projection apparatus of FIG. 1 and a region defined by a gamut of a conventional laser projector in CIE 1931 color space chromaticity diagram.
FIG. 3A is a schematic diagram of light paths of a first laser beam and a converting beam in an illumination system in another embodiment of the invention.
FIG. 3B is a schematic diagram of a light path of a second laser beam in the illumination system of FIG. 3A.
FIG. 3C is a schematic diagram of a light path of a third laser beam in the illumination system in FIG. 3A.
FIG. 4A is a schematic diagram of light paths of a first laser beam and a converting beam in an illumination system in yet another embodiment of the invention.
FIG. 4B is a schematic diagram of a light path of a second laser beam in the illumination system of FIG. 4A.
FIG. 4C is a schematic diagram of a light path of a third laser beam in the illumination system of FIG. 4A.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

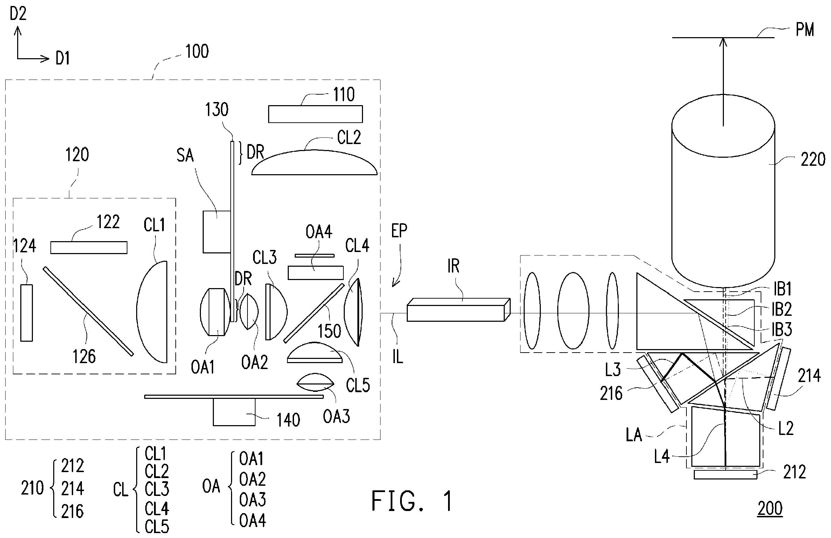

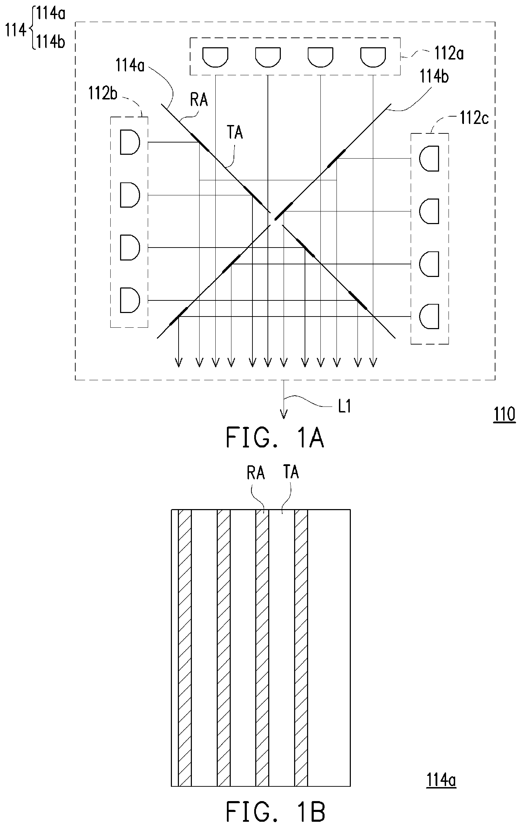

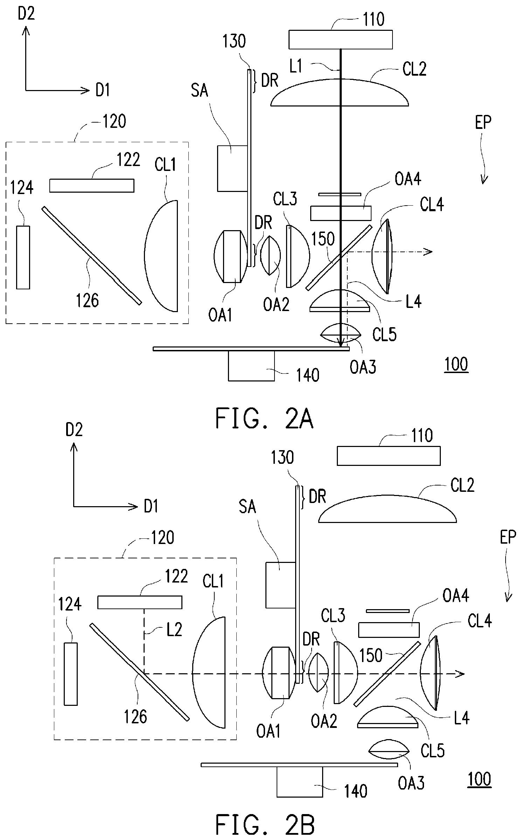

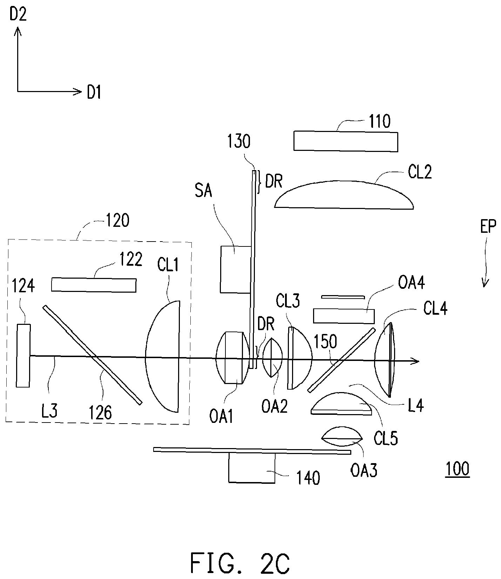

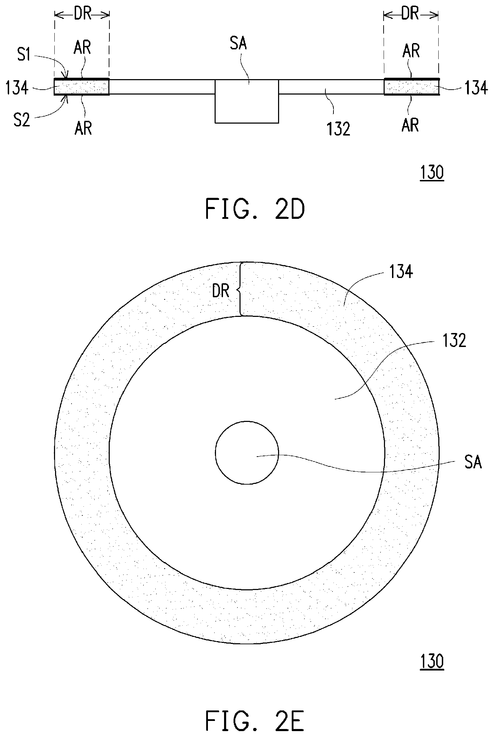

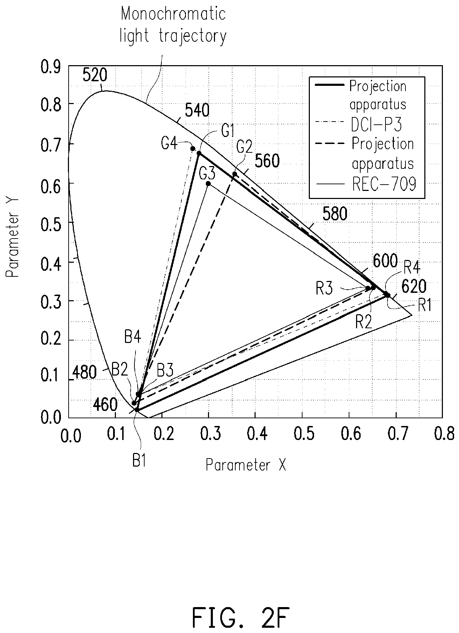

FIG. 1 is a schematic diagram of a projection apparatus according to an embodiment of the invention. FIG. 1A is a schematic diagram of light paths of three blue laser diode modules in a first light-emitting element in FIG. 1. FIG. 1B is a partial schematic diagram of a light-combining element in FIG. 1A. FIG. 2A is a schematic diagram of light paths of a first laser beam and a converting beam in an illumination system of FIG. 1. FIG. 2B is a schematic diagram of a light path of a second laser beam in the illumination system of FIG. 1. FIG. 2C is a schematic diagram of a light path of a third laser beam in the illumination system of FIG. 1. FIG. 2D is a cross-sectional view of a light-diffusing element in FIG. 1. FIG. 2E is a top view of a light-diffusing element in FIG. 1. FIG. 2F illustrates a region defined by REC.709 standard gamut, a region defined by DCI-P3 standard gamut, a region defined by a gamut of the projection apparatus of FIG. 1 and a region defined by a gamut of a conventional laser projector in CIE 1931 color space chromaticity diagram.

With reference to FIG. 1, in the embodiment, a projection apparatus 200 includes an illumination system 100, at least one light valve 210 and a projection lens 220. The illumination system 100 is configured to output beams to the at least one light valve 210. The illumination system 100 includes a first light-emitting element 110, a light-emitting module 120, a light-diffusing element 130, a wavelength conversion device 140 and a light-splitting element 150. Each of the above elements will be described in detail in the following paragraphs.

With reference to FIG. 1 and FIG. 2A, the first light-emitting element 110 includes a blue laser diode module or an array composed of multiple blue laser diode modules, but not limited thereto. The blue laser diode module includes a blue LD (Laser Diode) chip and may be composed of a plurality of blue laser diode banks. In the embodiment of FIG. 1A and FIG. 1B, the first light-emitting element 110 includes three blue laser diode modules 112a, 112b and 112c and one light-combining element 114. The light-combining element 114 may be an X-plate composed of two or three light-combining plates. FIG. 1A illustrates that the light-combining element 114 is composed of two light-combining plates 114a and 114b. In the embodiment, the light-combining plate 114a or 114b may be a transparent plate and have a plurality of transparent areas TA and a plurality of reflection areas RA which are alternately arranged, as shown in FIG. 1B. Each transparent area TA may be coated with an anti-reflection coating and each reflection area RA may be coated with a reflection coating. In other embodiments, the light-combining plate may be a plate piece with reflection function and have through holes disposed on the transparent areas, but the invention is not limited thereto. The blue laser diode modules 112b and 112c are respectively disposed on two opposite sides of the light-combining element 114, and the light-combining element 114 is located between the blue laser diode module 112a and the light-splitting element 150 (as shown in FIG. 1A). With reference to FIG. 1 and FIG. 1A, the blue laser diode modules 112a, 112b and 112c respectively emit laser beams from different directions towards the light-combining element 114. The reflection areas RA of the light-combining element 114 reflect the laser beams from the laser diode modules 112b and 112c. The transparent areas TA of the light-combining element 114 allow the laser beam from the laser diode module 112a to pass through. The laser beams reflected by the light-combining element 114 and the laser beam passing through the light-combining element 114 are guided to an identical transmission direction thereby forming a first laser beam L1.

With reference to FIG. 1 and FIG. 2A, the first light-emitting element 110 is configured to emit the first laser beam L1 (see FIG. 2A). The first laser beam L1 is a blue laser beam. A peak wavelength of the first laser beam L1 is in a range between 400 nm and 470 nm. By definition, the peak wavelength is a wavelength corresponding to a maximum light intensity.

With reference to FIG. 1, FIG. 2B and FIG. 2C, the light-emitting module 120 is implemented by a laser light-emitting module, and configured to emit a second laser beam L2 (see FIG. 2B) and a third laser beam L3 (see FIG. 2C). A wavelength of the second laser beam L2 is different from a wavelength of the third laser beam L3. Specifically, the light-emitting module 120 includes a second light-emitting element 122, a third light-emitting element 124 and a light-combining element 126. The second light-emitting element 122 includes a red laser diode module or an array composed of multiple red laser diode modules, but not limited thereto. The red laser diode module includes a red LD chip and may be composed of a plurality of red laser diode banks. The third light-emitting element 124 includes a blue laser diode module or an array composed of multiple blue laser diode modules, but not limited thereto. The blue laser diode module includes a blue LD (Laser Diode) chip and may be composed of a plurality of blue laser diode banks. The second light-emitting element 122 is configured to emit the second laser beam L2, and the second laser beam L2 is a red laser beam. A peak wavelength of the second laser beam L2 is in a range between 625 nm and 740 nm. The third light-emitting element 124 is configured to emit the third laser beam L3, and the third laser beam L3 is a blue laser beam. A peak wavelength of the third laser beam L3 is in a range between 400 nm and 470 nm. The light-combining element 126 is an optical element for combining more than one beam into one beam, such as a stripe mirror or a dichroic mirror. In the embodiment, the light-combining element 126 is the dichroic mirror configured to allow the third laser beam L3 from the third light-emitting element 124 to pass through and reflect the second laser beam L2 from the second light-emitting element 122. In other embodiments, the light-combining element may be the dichroic mirror for reflecting the third laser beam from the third light-emitting element and allowing the second laser beam from the second light-emitting element to pass through. However, the invention is not limited to the above.

The light-diffusing element 130 is an optical element configured to diffuse/scatter beams passing through the light-diffusing element, such as a diffuser wheel, a vibration diffuser, a diffusion plate, or a diffuser of other moving member, which is not particularly limited by the invention. In the embodiment, the light-diffusing element 130 is the diffuser wheel. With reference to FIG. 2D and FIG. 2E, specifically, the light-diffusing element 130 includes a body portion 132, a shaft SA, a light-diffusing structure 134 and an anti-reflection coating AR. The shaft SA is coupled to a motor (no shown), and fixed on the body portion 132 to serve as a rotating shaft of the body portion 132. The light-diffusing element 130 further includes a diffusion region DR. The diffusion region DR is in form of a ring shape surrounding the body portion 132 with the rotating shaft as the center. The light-diffusing structure 134 and the anti-reflection coating AR are correspondingly disposed within the diffusion region DR. The anti-reflection coating AR is disposed on at least one surface of two opposite surfaces S1 and S2 of the light-diffusing element 130. In the embodiment, the anti-reflection coating AR is disposed on the two opposite surfaces S1 and S2 of the light-diffusing structure 134. From another perspective, the anti-reflection coating AR is disposed on the surface S1 of the light-diffusing structure 134 facing towards the light-emitting module 120, and disposed on the surface S2 of the light-diffusing structure 134 facing towards the light-splitting element 150. The shaft SA is driven by the motor so the light-diffusing element 130 can rotate with the shaft SA thereby allowing the light-diffusing element134 and the anti-reflection coating AR within the diffusion region DR to rotate. In the embodiment, the light-diffusing element 130 is configured to allow the second laser beam L2 and the third laser beam L3 from the light-emitting module 120 to pass through, and used to eliminate the laser speckle phenomenon.

The wavelength conversion device 140 is an optical element configured to convert a short wavelength beam passing through the wavelength conversion device 140 into a long wavelength converting beam with respect to the short wavelength beam. In the embodiment, the wavelength conversion device 140 is a phosphor wheel, but not limited thereto. In the embodiment, the phosphor wheel is disposed with a photoluminescence material, which can receive the short wavelength beam and generate a corresponding converting beam L4 (see FIG. 2A) through the photoluminescence phenomenon. The photoluminescence material is, for example, a fluorescent powder. A type of the fluorescent powder is, for example, a fluorescent powder from which yellow light can be excited or a fluorescent powder from which green light can be excited, but the invention is not limited thereto. When the photoluminescence material is the fluorescent powder from which yellow light can be excited, the converting beam L4 corresponds to a yellow beam, where a peak wavelength of the converting beam L4 is in a range between 570 nm and 590 nm. When the photoluminescence material is the fluorescent powder from which green light can be excited, the converting beam L4 corresponds to a green beam, where the peak wavelength of the converting beam L4 is in a range between 495 nm and 570 nm. Further, in the embodiment, an optical power of the first light-emitting element 110 is approximately 440 watts; an optical power of the second light-emitting element 122 is approximately 82 watts; and an optical power of the third light-emitting element 124 is approximately 98 watts. Also, when the first light-emitting element 110 has the higher power irradiated on the fluorescent powder, a producible speckle power density range is 50 to 200 W/mm². The peak wavelength of the first laser beam L1 emitted by the first light-emitting element 110 may be different from the peak wavelength of the third laser beam L3 emitted by the third light-emitting element 124. In the embodiment, the peak wavelength of the first laser beam L1 may be 445 nm such that the first laser beam L1 with higher power can excite the fluorescent powder of the wavelength conversion device 140 more efficiently. The peak wavelength of the third laser beam L3 may be 465 nm such that blue chromaticity coordinate points of the projection apparatus 200 may be closer to DCI-P3 standard gamut in CIE 1931 color space chromaticity diagram, so as to prevent images projected by the projection apparatus 200 from having a purplish issue (details regarding the same will be described below).

The light-splitting element 150 is an optical element with light-splitting function. In the embodiment, the light-splitting element 150 is a dichroic mirror with wavelength selectivity, which is an color-separation film for color separation using wavelengths (colors), but not limited thereto. In the embodiment, the light-splitting element 150 is configured to allow the second laser beam L2 and the third laser beam L3 to pass through, and reflect the converting beam L4. In other words, in the embodiment, the light-splitting element 150 is designed to allow the blue beam and the red beam to pass through, and reflect the yellow beam or the green beam.

The light valve 210 refers to any one of spatial light modulators including a digital micro-mirror device (DMD), a liquid-crystal-on-silicon panel (LCOS panel) or a liquid crystal panel (LCD), and the number of the light valve 210 may be one or more. In the embodiment, the light valve 210 is the digital micro-mirror device, and the number of the light valve 210 is three, for example. In detail, a light valve 212 is configured to receive the converting beam L4 and convert the converging beam L4 into a first image beam IB1. A light valve 214 is configured to receive the second laser beam L2, and converted the second laser beam L2 into a second image beam IB2. A light valve 216 is configured to receive the third laser beam L3, and converted the third laser beam L3 into a third image beam IB3. In the embodiment, enough teaching, suggestion, and description regarding detailed steps and implementation for a method of converting the second laser beam L2, the third laser beam L3 and the converting beam L4 into the image beams by the light valve 210 may be obtained from the common knowledge in the field, which is not repeated hereinafter.

The projection lens 220 includes, for example, a combination of one or more optical lens with refractive powers, such as various combinations among non-planar lenses including a biconcave lens, a biconvex lens, a concavo-convex lens, convexo-convex lens, a plano-convex and a plano-concave lens. In an embodiment, the projection lens 220 may also include a planar optical lens. Forms and types of the projection lens 220 are not particularly limited by the invention. The projection lens 220 is disposed on transmission paths of the first, second and third image beams IB1 to IB3. In the embodiment, the projection lens 220 is configured to project the image beams IB1 to IB3 onto a projection medium PM. The projection medium PM is, for example, a projection screen or a projection wall, but the invention is not limited thereto.

In addition, in the embodiment, one or more condensing lenses CL (CL1 to CL5) or one or more optical collimating elements OA (OA1 to OA4) may be optionally added in the illumination system 100 To be specific, the condensing lens CL is a lens with condensing function, such as a convex lens. The optical collimating element OA is configured to convert a divergent/convergent beam into a parallel beam in parallel with an optical axis of the optical collimating element OA. A quality of the beams outputted by the illumination system 100 may be further improved with the condensing lenses CL and the optical collimating elements OA being added, but the invention is not limited thereto. Further, in the embodiment, an integration rod IR and an optical lens group LA may also be optionally added in the projection apparatus 200. The integration rod IR can uniformize the beams from the illumination system 100 and then output the uniform beams to the optical lens group LA. The optical lens group LA includes one or more condensing lens (not marked) or one or more split prism groups (not marked).

Disposition relationship among the above elements will be described in detail in the following paragraphs.

Referring to FIG. 1, FIG. 2A, FIG. 2B and FIG. 2C together, in the illumination system 100 of the embodiment, the light-diffusing element 130 is located between the light-emitting module 120 and the light-splitting element 150. More specifically, the diffusion region DR of the light-diffusing element 130 is disposed on transmission paths of the second laser beam L2 and the third laser beam L3, and the diffusion region DR is configured to allow the second laser beam L2 and the third laser beam L3 to pass through. As shown in FIG. 2A, the wavelength conversion device 140 is disposed on a transmission path of the first laser beam L1. As shown in FIG. 2B and FIG. 2C, the light-splitting element 150 is disposed on transmission paths of the second laser beam L2 and the third laser beam L3 passing through the light-diffusing element 130. As shown in FIG. 2A, the light-splitting element 150 is also disposed on the transmission path of the first laser beam L1 and disposed on a transmission path of the converting beam L4. In other words, in the embodiment, the first laser beam L1, the second laser beam L2, the third laser beam L3 and the converting beam L4 share the same light-splitting element 150. In the embodiment, the first light-emitting element 110 and the wavelength conversion device 140 are located on opposite sides of the light-splitting element 150. Next, with reference to FIG. 2B and FIG. 2C, in the light-emitting module 120, a light path of the second laser beam L2 and a light path of the third laser beam L3 are perpendicular to each other and met at the light-combining element 126. Referring to FIG. 2A and FIG. 2C together, a light path of the first laser beam L1 and a light path of the third laser beam L3 are perpendicular to each other and met at the light-splitting element 150.

On the other hand, after exiting from the illumination system 100, the converting beam L4, the second laser beam L2 and the third laser beam L3 respectively shown in FIG. 2A, FIG. 2B and FIG. 2C commonly form an integrated beam IL, as shown in FIG. 1. In the projection apparatus 200 of the embodiment, the integration rod IR is disposed on a transmission path of the integrated beam IL, and configured to receive and uniformize the integration beam IL from the illumination system 100. The optical lens group LA is disposed on a transmission path of the integrated beam IL exited from the integration rod IR, and configured to transmit the integrated beam IL to the light valve 210. The projection lens 220 is disposed on the transmission paths of the image beams IB1 to IB3 from the light valve 210.

Transmission manner of each laser beam will be described in detail in the following paragraphs.

With reference to FIG. 2A, when the first light-emitting element 110 emits the first laser beam L1 (the blue beam), the first laser beam L1 is transmitted to the wavelength conversion device 140 after passing through the condensing lens CL2, the optical collimating element OA4, the light-splitting element 150, the condensing lens CL5 and the optical collimating element OA3 in sequence. Then, the fluorescent powder of the wavelength conversion device 140 is irradiated by the first laser beam L1 to emit the converting beam L4. After being reflected by the wavelength conversion device 140, the converting beam L4 is transmitted to the light-splitting element 150 after passing through the optical collimating element OA3 and the condensing lens CL5 in sequence, then transmitted to the condensing lens CL4 after being reflected by the light-splitting element 150, and exits from an exit point EP of the illumination system 100. A transmission direction of the converting beam L4 is guided by the light-splitting element 150 to a direction D1. In the embodiment, a transmission direction of the first laser beam L1 remains in an opposite direction of a direction D2 without being changed. The transmission direction of the converting beam L4 is changed once by the light-splitting element 150.

With reference to FIG. 2B, FIG. 2D and FIG. 2E, when the second light-emitting element 122 of the light-emitting module 120 emits the second laser beam L2 (the red beam), the second laser beam L2 is transmitted to the condensing lens CL4 after passing through the light-combining element 126, the condensing lens CL1, the optical collimating element OA1, the anti-reflection coating AR of the light-diffusing element 130, the light-diffusing structure 134, the anti-reflection coating AR of the light-diffusing element 130, the optical collimating element OA2 and the condensing lens CL3 to the light-splitting element 150 in sequence, and exits from the exit point EP of the illumination system 100. In the embodiment, a transmission direction of the second laser beam L2 before passing through the light-combining element 126 is the opposite direction of the direction D2, and is then changed once by the light-combining element 126 and thus guided to the direction D1.

With reference to FIG. 2C, FIG. 2D and FIG. 2E, when the third light-emitting element 124 emits the third laser beam L3 (the blue beam), the third laser beam L3 is transmitted to the condensing lens CL4 after passing through the light-combining element 126, the condensing lens CL1, the optical collimating element OA1, the anti-reflection coating AR of the light-diffusing element 130, the light-diffusing structure 134, the anti-reflection coating AR of the light-diffusing element 130, the optical collimating element OA2 and the condensing lens CL3 to the light-splitting element 150 in sequence, and exits from the exit point EP of the illumination system 100. In the embodiment, a transmission direction of the third laser beam L3 remains in the direction D1 without being changed.

With reference to FIG. 2B, FIG. 2C and FIG. 2D, it is noted that, while passing through the diffusion region DR of the light-diffusing element 130, the second laser beam L2 and the third laser beam L3 will be diffused/scattered by the light-diffusing structure 134 within the diffusion region DR to lower an energy density for the laser beams. Also, the light-diffusing element 130 can reduce the laser speckle phenomenon by rotation.

With reference to FIG. 2B and FIG. 2C, in the embodiment, the light-combining element 126 is configured to make the light path of the second laser beam L2 passed through the light-combining element 126 be identical to the light path of the third laser beam L3 via the light-combining element 126. From another perspective, the transmission directions of the second laser beam L2 and the third laser beam L3 via the light-combining element 126 are both the direction D1.

Referring back to FIG. 2, FIG. 2B and FIG. 2C, in the embodiment, the light-splitting element 150 is configured to guide the second laser beam L2, the third laser beam L3 and the conversion beam L4 to the same direction D1, that is, to guide the second laser beam L2, the third laser beam L3 and the conversion beam L4 towards the same exit point EP, for example. Further, in an embodiment, when the first laser beam L1 and the third laser beam L3 are the blue beams, the second laser beam L2 is the red beam and the converting beam is the yellow beam or the green beam, the light-slitting element 150 may be designed through coating to include a light transmittance greater than or equal to 95% at wavelength band between 430 nm to 460 nm, a light transmittance greater than or equal to 95.5% at wavelength band between 636 nm to 666 nm and a light transmittance less than or equal to 1% at wavelength band between 490 nm to 603 nm (i.e., the light-splitting element 150 allows the blue beam and the red beam to pass through and reflects the yellow beam and the green beam). However, the invention is not limited thereto. Light transmittance and light reflectance may be adjusted according to colors of light to be reflected and colors of light to be allowed for passing through by the light-splitting element in practical application.

Referring back to FIG. 1, after exiting from the illumination system 100, the converting beam L4, the second laser beam L2 and the third laser beam L3 commonly form the integrated beam IL. The integrated beam IL passes through the integration rod IR and the optical lens group LA in sequence. The integration rod IR is configured to uniformize the integrated beam IL. After being condensed by a condensing lens group in the optical lens group LA, the integrated beam IL undergoes a light-splitting through a split prism group in the optical lens group LA, such that the converting beam L4 in the integrated beam IL is transmitted to the light valve 212, the second laser beam L2 in the integrated beam IL is transmitted to the light valve 214 and the third laser beam L3 in the integrated beam IL is transmitted to the light valve 216. The light valve 212 receives the converting beam L4 to form the first image beam IB1. The light valve 214 receives the second laser beam L2 to form the second image beam IB2. The light valve 216 receives the third laser beam L3 to form the third image beam IB3. Next, the first image beam IB1, the second image beam IB2 and the third image beam IB3 are transmitted onto the projection medium PM through the optical lens group LA and the projection lens 220 to form a projection frame.

With reference to FIG. 2F, CIE 1931 color space is a color space defined in a mathematical form by International Commission on Illumination (CIE) in 1931. The horizontal axis "Parameter x" and the vertical axis "Parameter y" in FIG. 2F are used to define a chromaticity for colors in form of coordinates. The chromaticity coordinate points on "Monochromatic light trajectory" indicate each of the chromaticity coordinate points where chromatic expressions of monochromatic light having specific wavelengths are located, with wavelengths shown in nanometers. For instance, the point marked by 520 on "Monochromatic light trajectory" in FIG. 2F indicates the chromaticity coordinate point where the chromatic expression of the monochromatic light having the wavelength of 520 nm is located. Further, a region illustrated for "Projection apparatus" in FIG. 2F indicates a region defined by a gamut of the projection apparatus 200 of FIG. 1 in CIE 1931 color space chromaticity diagram, wherein a coordinate point R1, a coordinate point G1 and a coordinate point B1 respectively indicate a red coordinate point (0.6830, 0.3169), a green coordinate point (0.2795, 0.6783) and a blue coordinate point (0.1503, 0.0259) which define the gamut of the projection apparatus 200. A region illustrated for "Conventional laser projector" in FIG. 2F indicates a region defined by a gamut of the conventional laser projector in CIE 1931 color space chromaticity diagram, wherein a coordinate point R2, a coordinate point G2 and a coordinate point B2 respectively indicate a red coordinate point (0.6557, 0.3352), a green coordinate point (0.3555, 0.6224) and a blue coordinate point (0.1398, 0.0375) which define the gamut of the conventional laser projector. A region illustrated for "REC.709" in FIG. 2F indicates a region defined by REC.709 standard gamut in CIE 1931 color space chromaticity diagram, wherein a coordinate point R3, a coordinate point G3 and a coordinate point B3 respectively indicate a red coordinate point (0.6400, 0.3300), a green coordinate point (0.3000, 0.6000) and a blue coordinate point (0.1500, 0.0600) which define the gamut of the REC.709 standard gamut. A region illustrated for "DCI-P3" in FIG. 2F indicates a region defined by DCI-P3 standard gamut in CIE 1931 color space chromaticity diagram, wherein a coordinate point R4, a coordinate point G4 and a coordinate point B4 respectively indicate a red coordinate point (0.6800, 0.3200), a green coordinate point (0.2650, 0.6900) and a blue coordinate point (0.1500, 0.0600) which define the gamut of the projection apparatus. Next, with reference to Table 1 below, Table 1 lists the red coordinate points, the green coordinate points and the blue coordinate points respectively included by REC.709 standard gamut, DCI-P3 standard gamut, the gamut of the projection apparatus 200 and the gamut of the conventional laser projector. Moreover, a gamut area ratio is further defined herein. The gamut area ratio is a ratio between gamut areas between gamut areas of two gamuts defined in CIE 1931 color space chromaticity diagram. Table 1 further lists the gamut area ratios of the projection apparatus in FIG.1 and the conventional laser projector with respect to REC.709 standard gamut, as well as the gamut area ratios of the projection apparatus in FIG.1 and the conventional laser projector with respect to DCI-P3 standard gamut.

**Table 1**

| | Red Coordinate point | Green Coordinate point | Blue Coordinate point | REC.709 Gamut ratio | DCI-P3 Gamut ratio |
|---|---|---|---|---|---|
| Conventional laser projector | R2 (0.6557, 0.3352) | G2 (0.3555, 0.6224) | B2 (0.1398, 0.0375) | 91.5% | 73.2% |
| PROJECTION APPARATUS | R1 (0.6830, 0.3169) | G1 (0.2795, 0.6783) | B1 (0.1503, 0.0259) | 99.7% | 95.1% |
| DCI-P3 | R4 (0.6800, 0.3200) | G4 (0.2650, 0.6900) | B4 (0.1500, 0.0600) | | |
| REC.709 | R3 (0.6400, 0.3300) | G3 (0.3000, 0.6000) | B3 (0.1500, 0.0600) | | |

In view of the above, it can be known that, both the gamut ratios of the projection apparatus 200 of the embodiment in different standard gamuts (DCI-P3 and REC.709) are greater than the gamut ratios of the conventional laser projector in the different standard gamuts. In other words, the projection apparatus 200 of the embodiment is more capable of achieving the wide gamut color display than the conventional laser projector.

The projection apparatus 200 in FIG. 1 is, for example, a projection apparatus having a triple-piece light valve 210. In other embodiments not shown, the projection apparatus has, for example, a single-piece light valve, and a color wheel may be added between the light valve and the exit point of the projection apparatus having the single-piece light valve. The integrated beam provided by the illumination system can go through the color wheel in order to provide beams with different colors to the light valve at different timings so the light valve can correspondingly form image beams with different colors at different timings.

As mentioned above, in the illumination system 100 of the embodiment, the first laser beam L1 provided by the first light-emitting element 110 excites the wavelength conversion device 140 to form the converting beam L4, and the light-emitting module 120 is configured to emit the second laser beam L2 and the third laser beam L3 having the different wavelengths. Accordingly, the illumination system 100 of the embodiment can easily modify a color property (e.g., the color property is a color temperature or a chromaticity coordinate) of the integrated beam IL outputted by the illumination system 100 by controlling the light intensities included by the first, second and third laser beams L1 to L3. Further, because the projection apparatus 200 of the embodiment includes the illumination system 100 described above, the projection apparatus 200 of the embodiment can easily adjust the color property of the projection frame by adjusting the light intensities included by the first, second and third laser beams L1 to L3. Furthermore, in the illumination system 100 and the projection apparatus 200 of the embodiment, the light-diffusing element 130 is disposed on both the transmission path of the second laser beam L2 and the transmission path of the third laser beam L3. In other words, the second laser beam L2 and the third laser beam L3 share the light-diffusing element 130. Therefore, the illumination system 100 and the projection apparatus 200 of the embodiment can have simple structure and lower manufacturing cost.

On the other hand, when the first laser beam L1 and the third laser beam L3 are the blue beams, the second laser beam L2 is the red beam and the converting beam L4 is the yellow beam or the green beam, the frame projected by the projection apparatus 200 of the embodiment can achieve the wide gamut color display.

Here, it should be noted that the following embodiments continue to use certain content in the previous embodiment, and description for the same technical contents is omitted. Description regarding same element name can refer to the certain content in the foregoing embodiment, which is not repeated in the following embodiments.

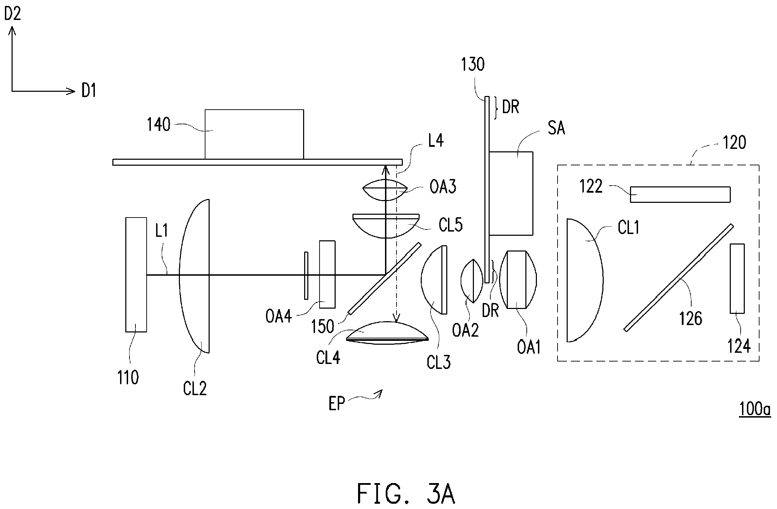

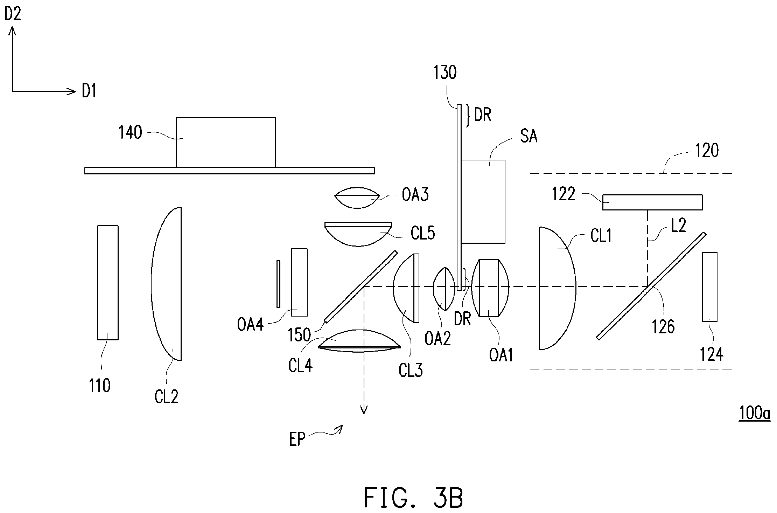

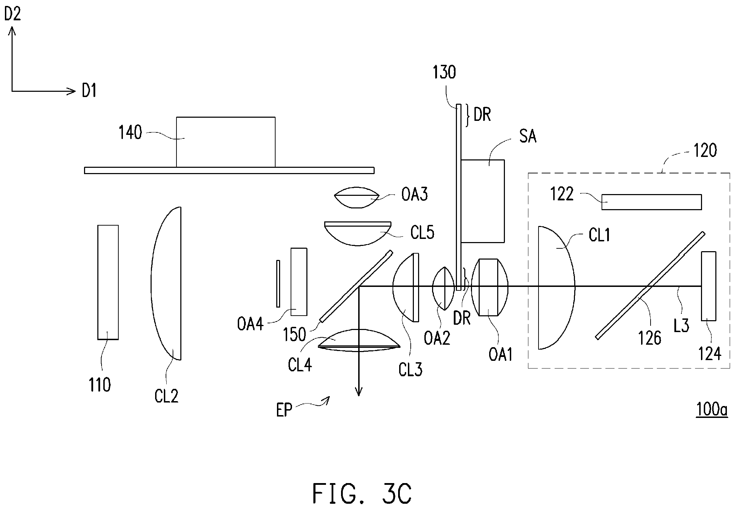

FIG. 3A is a schematic diagram of light paths of a first laser beam and a converting beam in an illumination system in another embodiment of the invention. FIG. 3B is a schematic diagram of a light path of a second laser beam in the illumination system of FIG. 3A. FIG. 3C is a schematic diagram of a light path of a third laser beam in the illumination system in FIG. 3A.

Referring to FIG. 3A, FIG. 3B and FIG. 3C together, a major difference between an illumination system 100a and the illumination system 100 in FIG. 2A, FIG. 2B and FIG. 2C is that, a light path of the first laser beam L1 and a light path of the third laser beam L3 are parallel to each other and met at the light-splitting element 150. In other words, the exit point of the first light-emitting element 110 and the exit point of the third light-emitting element 124 in the light-emitting module 120 are disposed opposite to each other. In the embodiment, the light-splitting element 150 is configured to reflect the second laser beam L2 and the third laser beam L3 and allow the converting beam L4 to pass through. In other words, the light-splitting element 150 is designed to reflect the blue beam and the red beam, and allow transmission of the yellow beam or the green beam. The exit point EP of the illumination system 100a is located on lower side.

Next, the difference between the illumination system 100a and the illumination system 100 in terms of the light paths is described as follows.

With reference to FIG. 3A, when the first light-emitting element 110 emits the first laser beam L1, the first laser beam L1 passes through the condensing lens CL2, the optical collimating element OA4 and the light-splitting element 150 in sequence. Then, the first laser beam L1 is reflected by the light-splitting element 150 to change the transmission direction, and then transmitted to the wavelength conversion device 140 after passing through the condensing lens CL5 and the optical collimating element OA3 in sequence. The fluorescent powder of the wavelength conversion device 140 is irradiated by the first laser beam L1 to emit the converting beam L4. After being reflected by the wavelength conversion device 140, the converting beam L4 is transmitted to the light-splitting element 150 after passing through the optical collimating element OA3 and the condensing lens CL5 in sequence. The converting beam L4 is transmitted to the condensing lens CL4 after passing through the light-splitting element 150, and exits from the exit point EP of the illumination system 100a. The transmission direction of the converting beam L4 is guided by the light-splitting element 150 to the opposite direction of the direction D2. In the embodiment, the first laser beam L1 is guided from the direction D1 to the direction D2 (i.e., the transmission path is changed once), whereas the transmission direction of the converting beam L4 remained unchanged.

With reference to FIG. 3B, when the second light-emitting element 122 emits the second laser beam L2, the second laser beam L2 is transmitted to the light-splitting element 150 after passing through the light-combining element 126, the condensing lens CL1, the optical collimating element OA1, the anti-reflection coating AR of the light-diffusing element 130, the light-diffusing structure 134, the anti-reflection coating AR of the light-diffusing element 130, the optical collimating element OA2 and the condensing lens CL3 in sequence. The light-splitting element 150 reflects the second laser beam L2 such that the transmission direction of the second laser beam L2 is changed. The transmission direction of the second laser beam L2 is guided by the light-splitting element 150 to the opposite direction of the direction D2. Next, the second laser beam L2 then exits from the exit point EP of the illumination system 100a after passing through the condensing lens CL4. In the embodiment, the second laser beam L2 is guided from the opposite direction of the direction D2 to an opposite direction of the direction D1, and then guided again to the opposite direction of the direction D2 (i.e., the transmission direction is changed twice respectively by the light-combining element 126 and the light-splitting element 150).

With reference to FIG. 3C, when the third light-emitting element 124 emits the third laser beam L3, the third laser beam L3 is transmitted to the light-splitting element 150 after passing through the light-combining element 126, the condensing lens CL1, the optical collimating element OA1, the anti-reflection coating AR of the light-diffusing element 130, the light-diffusing structure 134, the anti-reflection coating AR of the light-diffusing element 130, the optical collimating element OA2 and the condensing lens CL3 in sequence. The light-splitting element 150 reflects the third laser beam L3 such that the transmission direction of the third laser beam L3 is changed. The transmission direction of the third laser beam L3 is guided by the light-splitting element 150 to the opposite direction of the direction D2. Next, the third laser beam L3 then exits from the exit point EP of the illumination system 100a after passing through the condensing lens CL4. In the embodiment, the third laser beam L3 is guided from the opposite direction of the direction D1 to the opposite direction of the direction D2, (i.e., the transmission direction is changed once by the light-splitting element 150).

Referring back to FIG. 3, FIG. 3A and FIG. 3C, in the embodiment, the light-splitting element 150 is configured to guide the second laser beam L2, the third laser beam L3 and the conversion beam L4 to an identical transmission direction (i.e., the opposite direction of the direction D2), that is, to guide the second laser beam L2, the third laser beam L3 and the conversion beam L4 towards the same exit point EP, for example. Further, in an embodiment, when the first laser beam L1 and the third laser beam L3 are the blue beams, the second laser beam L2 is the red beam and the converting beam is the yellow beam or the green beam, the light-slitting element 150 may be designed through coating to include a light reflectance greater than or equal to 95% at wavelength band between 430 nm to 460 nm, a light reflectance greater than or equal to 95.5% at wavelength band between 636 nm to 666 nm and a light reflectance less than or equal to 1% at wavelength band between 490 nm to 603 nm (i.e., the light-splitting element 150 allows the yellow beam and the green beam to pass through and reflects the blue beam and the red beam). However, the invention is not limited thereto. Light transmittance and light reflectance may be adjusted according to colors of light to be reflected and colors of light to be allowed for passing through by the light-splitting element in practical application.

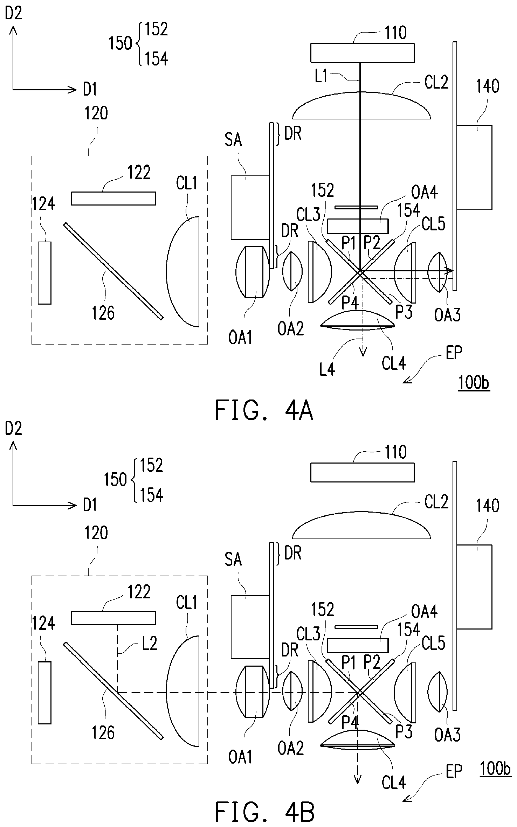

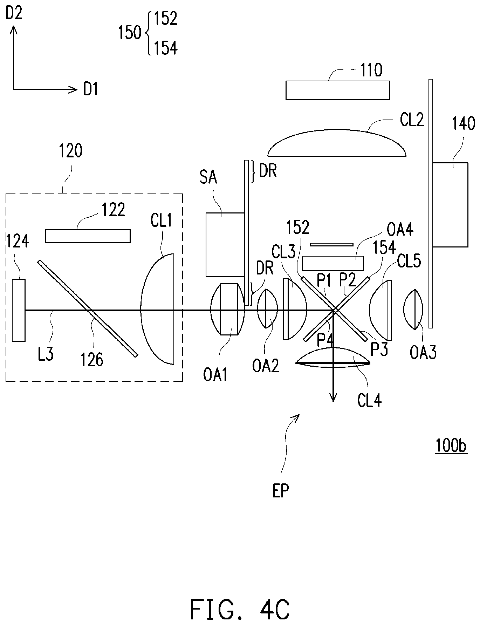

FIG. 4A is a schematic diagram of light paths of a first laser beam and a converting beam in an illumination system in yet another embodiment of the invention. FIG. 4B is a schematic diagram of a light path of a second laser beam in the illumination system of FIG. 4A. FIG. 4C is a schematic diagram of a light path of a third laser beam in the illumination system of FIG. 4A.

Referring to FIG. 4A, FIG. 4B and FIG. 4C together, a major difference between an illumination system 100b and the illumination system 100 in FIG. 2A, FIG. 2B and FIG. 2C is that, the first light-emitting element 110 and the wavelength conversion device 140 are substantially located on the adjacent sides of the light-splitting element 150. Also, in the embodiment, the light-splitting element 150 includes a first light-splitting plate 152 and a second light-splitting plate 154, and the first light-splitting plate 152 and the second light-splitting plate 154 commonly constitute an X-plate. To be specific, the first light-slitting plate 152 ineludes a first portion P1 and a third portion P3. The second light-slitting plate 154 includes a second portion P2 and a fourth portion P4. In view of FIG. 4A, FIG. 4B and FIG. 4C, the first portion P1 is located on upper-left of the X-plate, the second portion P2 is located on upper-right of the X-plate, the third portion P3 is located on lower-right of the X-plate and the fourth portion P4 is located on lower-left of the X-plate. That is to say, a space formed between the first portion P1 of the first light-splitting plate 152 and the fourth portion P4 of the second light-splitting plate 154 corresponds to the light-emitting module 120, a space formed between the first portion P1 of the first light-splitting plate 152 and the second portion P2 of the second light-splitting plate 154 corresponds to the first light-emitting element 110, a space formed between the third portion P3 of the first light-splitting plate 152 and the second portion P2 of the second light-splitting plate 154 corresponds to the wavelength conversion device 140, and a space formed between the third portion P3 of the first light-splitting plate 152 and the fourth portion P4 of the second light-splitting plate 154 corresponds to the condensing lens CL4. The first portion P1 is configured to reflect the first laser beam L1, the second laser beam L2 and the third laser beam L3. The second portion P2 is configured to allow the first laser beam L1 to pass through and reflect the converting beam L4. The third portion P3 is configured to reflect the first laser beam L1, the second laser beam L2 and the third laser beam L3 and allow the converting beam L4 to pass through. The fourth portion P4 is configured to allow the second laser beam L2 and the third laser beam L3 to pass through and reflect the converting beam L4. In other words, the first portion P1 is configured to reflect the red beam and the blue beam. The second portion P2 is configured to allow the blue beam to pass through and reflect the green beam or the yellow beam. The third portion P3 is configured to reflect the blue beam and the red beam and allow the green beam or the yellow beam to pass through. The fourth portion P4 is configured to allow the red beam and the blue beam to pass through and reflect the yellow beam or the green beam. In the embodiment, the exit point EP of the illumination system 100b is located on lower side.

Next, the difference between the illumination system 100b and the illumination system 100a in terms of the light paths is described as follows.

With reference to FIG. 4A, when the first light-emitting element 110 emits the first laser beam L1, the first laser beam L1 passes through condensing lens CL2, the optical collimating element OA4, the light-splitting element 150 in sequence, and is then transmitted to the wavelength conversion device 140 after the transmission direction is changed by the light-splitting element 150. Here, a part of the first laser beam L1 is first reflected by the first portion P1 of the first light-splitting plate 152 (such that the transmission direction is changed), and then transmitted to the wavelength conversion device 140 after passing through the second portion P2 of the second light-splitting plate 154. Meanwhile, another part of the first laser beam L1 is first transmitted to the third portion P3 of the first light-splitting plate 152 after passing through the second portion P2 of the second light-splitting plate 154, then reflected by the third portion P3 of the first light-splitting plate 152 (such the transmission direction is changed), and transmitted to the wavelength conversion device 140. The fluorescent powder of the wavelength conversion device 140 is irradiated by the first laser beam L1 to emit the converting beam L4. After being reflected by the wavelength conversion device 140, the converting beam L4 is transmitted to the light-splitting element 150 after passing through the optical collimating element OA3 and the condensing lens CL5 in sequence (such the transmission direction is changed), then transmitted to the condensing lens CL4 and exits from the exit point EP of the illumination system 100b. Here, a part of the converting beam L4 is first reflected by the second portion P2 of the second light-splitting plate 154 (such that the transmission direction is changed), and then transmitted to the condensing lens CL4 after passing through the third portion P3 of the first light-splitting plate 152. Another part of the converting beam L4 is first transmitted to the fourth portion P4 of the second light-splitting plate 154 after passing through the third portion P3 of the first light-splitting plate 152, then is transmitted to the condensing lens CL4 after being reflected by the fourth portion P4 of the second light-splitting plate 154 (such the transmission direction is changed), and exits from the illumination system 100b. The transmission direction of the converting beam L4 is guided by the second light-splitting plate 154 to the opposite direction of the direction D2. In the embodiment, the transmission direction of the first laser beam L1 is changed once by the first light-splitting plate 152. The transmission direction of the converting beam L4 is changed once by the second light-splitting plate 154.

With reference to FIG. 4B, when the second light-emitting element 122 emits the second laser beam L2, the second laser beam L2 is transmitted to the light-splitting element 150 after passing through the light-combining element 126, the condensing lens CL1, the optical collimating element OA1, the anti-reflection coating AR of the light-diffusing element 130, the light-diffusing structure 134, the anti-reflection coating AR of the light-diffusing element 130, the optical collimating element OA2 and the condensing lens CL3 in sequence, and then transmitted to the wavelength conversion device 140 after the transmission direction is changed by the light-splitting element 150. Here, a part of the second laser beam L2 is first reflected by the first portion P1 of the first light-splitting plate 152, then transmitted to the condensing lens CL4 after passing through the fourth portion P4 of the second light-splitting plate 154, and exits from the exit point EP of the illumination system 100b. Meanwhile, another part of the second laser beam L2 is first transmitted to the third portion P3 of the first light-splitting plate 152 after passing through the fourth portion P4 of the second light-splitting plate 154, then transmitted to the condensing lens CL4 after being reflected by the third portion P3 of the first light-splitting plate 152 (such that the transmission direction is changed), and exits from the exit point EP of the illumination system 100b. In the embodiment, the transmission direction of the second laser beam L2 is changed twice respectively by the light-combining element 126 and the first light-splitting plate 152.

With reference to FIG. 4C, when the third light-emitting element 124 emits the third laser beam L3, the third laser beam L3 is transmitted to the light-splitting element 150 after passing through the light-combining element 126, the condensing lens CL1, the optical collimating element OA1, the anti-reflection coating AR of the light-diffusing element 130, the light-diffusing structure 134, the anti-reflection coating AR of the light-diffusing element 130, the optical collimating element OA2 and the condensing lens CL3 in sequence, and the third laser beam L3 is transmitted to the light-splitting element 150 and is changed the transmission direction by the light-splitting element 150. Here, a part of the third laser beam L3 is first reflected by the first portion P1 of the first light-splitting plate 152, then transmitted to the condensing lens CL4 after passing through the fourth portion P4 of the second light-splitting plate 154, and exits from the exit point EP of the illumination system 100b. Meanwhile, another part of the third laser beam L3 is first transmitted to the third portion P3 of the first light-splitting plate 152 after passing through the fourth portion P4 of the second light-splitting plate 154, then transmitted to the condensing lens CL4 after being reflected by the third portion P3 of the first light-splitting plate 152 (such that the transmission direction is changed), and exits from the exit point EP of the illumination system 100b. In the embodiment, the transmission direction of the third laser beam L3 is changed once by the first light-splitting plate 152.

By using different light path dispositions of the illumination systems 100, 100a and 100b in the foregoing embodiments of the invention and the designed reflection and transmittance function of the light-splitting element 150 corresponding to the different beams, each of the illumination systems 100, 100a and 100b can have the exit point EP located on the different locations. Therefore, the illumination systems 100, 100a and 100b in the foregoing embodiments of the invention can provide a design flexibility.

It should be noted that, the illumination systems 100, 100a and 100b may be applied in the projection apparatus 200 of FIG. 1. More specifically, the illumination systems 100a and 100b can replace the illumination system 100 in FIG. 1 for providing the integrated beam IL to the light valve 210 in the projection apparatus 200 so the projection apparatus 200 can display the projection frame.

In summary, in the illumination system according to the embodiments of the invention, the first laser beam provided by the first light-emitting element excites the wavelength conversion device to form the converting beam, and the light-emitting module is configured to emit the second laser beam and the third laser beam having the different wavelengths. Accordingly, the illumination system according to the embodiments of the invention can modify the color property of the integrated beam outputted by the illumination system by controlling the light intensities included by the first, second and third laser beams. Further, because the projection apparatus according to the embodiments of the embodiment includes the illumination system described above, the projection apparatus according to the embodiments of the invention can adjust the color property of the projection frame by adjusting the light intensities included by the first, second and third laser beams. Furthermore, in the illumination system and the projection apparatus according to the embodiments of the invention, the light-diffusing element is disposed on both the transmission path of the second laser beam and the transmission path of the third laser beam. Therefore, the illumination system and the projection apparatus according to the embodiments of the invention can have simple structure and lower manufacturing cost.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An illumination system, comprising a first light-emitting element, a light-emitting module, a light-diffusing element, a wavelength conversion device and a light-splitting element, wherein the first light-emitting element is configured to emit a first laser beam;
the light-emitting module is configured to emit a second laser beam and a third laser beam, wherein a wavelength of the second laser beam is different from a wavelength of the third laser beam;
the light-diffusing element is located between the light-emitting module and the light-splitting element, and configured to allow the second laser beam and the third laser beam to pass through;
the wavelength conversion device is disposed on a transmission path of the first laser beam, and the wavelength conversion device is excited by the first laser beam to emit a converting beam; and
the light-splitting element is disposed on a transmission path of the second laser beam and a transmission path of the third laser beam passing through the light-diffusing element, disposed on the transmission path of the first laser beam and disposed on a transmission path of the converting beam,
wherein the light-splitting element is configured to guide the second laser beam, the third laser beam and the converting beam to an identical transmission direction.

2. The illumination system according to claim 1, **characterized in that** the light-emitting module comprises a second light-emitting element and a third light-emitting element, wherein the second light-emitting element is configured to emit the second laser beam, and the third light-emitting element is configured to emit the third laser beam.

3. The illumination system according to claim 1 or 2, **characterized in that** the light-emitting module further comprises a light-combining element, and the light-combining element is configured to make a light path of the second laser beam passing through the light-combining element be identical to a light path of the third laser beam passing through the light-combining element.

4. The illumination system according to any one of the claims 1-3, **characterized in that** a light path of the first laser beam and a light path of the third laser beam are perpendicular to each other and met at the light-splitting element.

5. The illumination system according to any one of the claims 1-3, **characterized in that** a light path of the first laser beam and a light path of the third laser beam are parallel to each other and met at the light-splitting element.

6. The illumination system according to any one of the preceding claims, **characterized in that** the light-splitting element is configured to allow the second laser beam and the third laser beam to pass through and reflect the converting beam.

7. The illumination system according to any one of the preceding claims 1-5, **characterized in that** the light-splitting element is configured to reflect the second laser beam and the third laser beam and allow the converting beam to pass through.

8. The illumination system according to any one of the preceding claims, **characterized in that** the light-diffusing element comprises a light-diffusing structure and an anti-reflection coating.

9. The illumination system according to claim 8, wherein the anti-reflection coating and the light-diffusing structure are respectively disposed on two opposite surfaces of the light-diffusing element.

10. The illumination system according to claim 8 or 9, wherein the second laser beam and the third laser beam are transmitted to the light-splitting element after passing through the anti-reflection coating and the light-diffusing structure in sequence.

11. The illumination system according to any one of the preceding claims, **characterized in that** the second laser beam is a red laser beam, the first laser beam and the third laser beam are blue laser beams, and the converting beam is a yellow beam or a green beam.

12. The illumination system according to any one of the preceding claims, **characterized in that** the light-splitting element comprises a first light-splitting plate and a second light-splitting plate, the first light-splitting plate comprises a first portion and a third portion, and the second light-splitting plate comprises a second portion and a fourth portion.

13. The illumination system according to claim 12, wherein the first portion is configured to reflect the first laser beam, the second laser beam and the third laser beam,
the second portion is configured to allow the first laser beam to pass through and reflect the converting beam,
the third portion is configured to reflect the first laser beam, the second laser beam and the third laser beam and allow the converting beam to pass through, and
the fourth portion is configured to allow the second laser beam and the third laser beam to pass through and reflect the converting beam.

14. The illumination system according to any one of the preceding claims, **characterized in that** the light-emitting module comprises a second light-emitting element, a third light-emitting element and a light-combining element, wherein the second light-emitting element is configured to emit the second laser beam, the third light-emitting element is configured to emit the third laser beam, and the light-combining element is configured to make a light path of the second laser beam via the light-combining element be identical to a light path of the third laser beam via the light-combining element, wherein a light path of the first laser beam and a light path of the third laser beam are perpendicular to each other and met at the light-splitting element, the light-splitting element is configured to allow the second laser beam and the third laser beam to pass through and reflect the converting beam, the second laser beam is a red laser beam, the first laser beam and the third laser beam are blue laser beams, and the converting beam is a yellow beam or a green beam.

15. A projection apparatus, comprising:
an illumination system as claimed in any one of the preceding claims,
at least one light valve, and
a projection lens,
wherein the at least one light valve is configured to receive the converting beam to form a first image beam, receive the second laser beam to form a second image beam, and receive the third laser beam to form a third image beam; and
the projection lens is disposed on a transmission path of the first image beam, a transmission path of the second image beam and a transmission path of the third image beam, and projects the first image beam, the second image beam and the third image beam onto a projection medium.
